# EUROPEAN PATENT APPLICATION

(11) **EP 4 852 307 A1**
(43) Date of publication of application: **09.12.2026**
(21) Application number: 25819554.4
(22) Date of filing: 17.04.2025
(51) Int. Cl.: H02P 21/22, H02K 7/10, H02P 29/028

(54) **PROTECTION DEVICE, DRIVE SYSTEM, PROTECTION METHOD, AND PROGRAM**

(30) Priority: 05.06.2024 JP 2024091457
(71) Applicant: Mitsubishi Heavy Industries, Ltd., Tokyo 100-8332 (JP); Magnomatics Limited, Sheffield S2 5BQ (GB)
(72) Inventor: WAKASA, Tsuyoshi, Tokyo 100-8332 (JP); ARINAGA, Shinji, Takasago City, Hyogo 676-8686 (JP); HAYASHI, Toshikazu, Tokyo 100-8332 (JP); MARUYAMA, Masanori, Tokyo 100-8332 (JP); YUGE, Atsushi, Tokyo 100-8332 (JP); CALVERLEY, Stuart, Sheffield, South Yorkshire S25BQ (GB)
(74) Representative: Studio Torta S.p.A.
(86) International application number: PCT/JP2025/015104
(87) International publication number: WO 2025/253792

(57) **Abstract**

A protection device includes a determination unit configured to determine, based on input signals input from a magnetic geared motor, an inverter, a rotation angle sensor, a current sensor, a main control device, and an inverter control device, whether a failure mode of a drive system is a major failure indicating a failure that disables control of the magnetic geared motor, or a minor failure indicating a failure that enables control of the magnetic geared motor, and a resynchronization processing unit configured to resynchronize rotation of a high-speed rotor and rotation of a low-speed rotor when the failure mode is determined to be the major failure and only step-out has occurred.

## Description

### TECHNICAL FIELD

The present disclosure relates to a protection device, a drive system, a protection method, and a program. Priority is claimed on Japanese Patent Application No. 2024-091457, filed June 5, 2024, the content of which is incorporated herein by reference.

### BACKGROUND ART

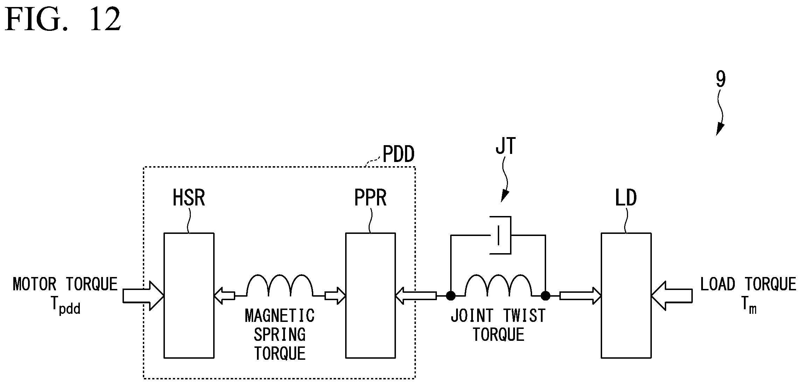

FIG. 12 is a diagram showing a configuration of a drive system in the related art. As shown in FIG. 12, a drive system 9 includes a magnetic geared motor PDD configured to rotationally drive a load machine LD (propeller, wheel, or the like). The magnetic geared motor PDD includes a high-speed rotor HSR, and a low-speed rotor PPR. The high-speed rotor HSR and the low-speed rotor PPR transmit torque in a non-contact manner by means of a magnetic spring. By this magnetic spring, the low-speed rotor PPR rotates in synchronization with the high-speed rotor HSR at a predetermined reduction ratio. When the low-speed rotor PPR rotates, the load machine LD connected via a joint JT and a rotary shaft (not shown) is rotationally driven.

For example, when load torque larger than a maximum transmission torque of the magnetic spring is generated, or when the rotation speed of the high-speed rotor HSR is rapidly changed, the high-speed rotor HSR and the low-speed rotor PPR cannot rotate in synchronization with each other. This phenomenon is called step-out. When the step-out occurs, it is difficult to continue the operation safely, and thus it is necessary to stop the operation of the magnetic geared motor PDD.

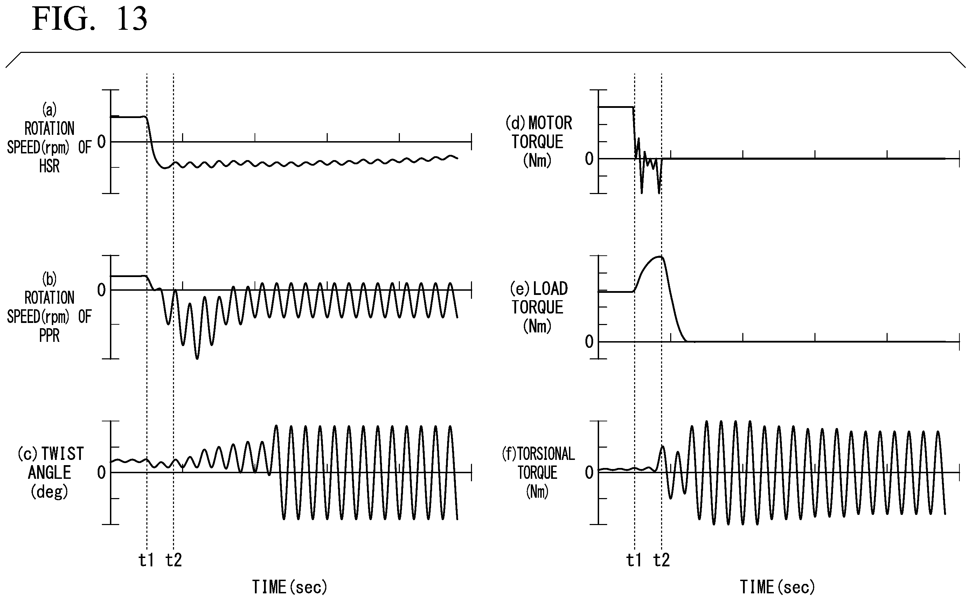

FIG. 13 is a diagram showing an example of measurement values when the step-out occurs in the related art. (a) of FIG. 13 is a time series of the rotation speed [rpm] of the high-speed rotor HSR, (b) of FIG. 13 is a time series of the rotation speed [rpm] of the low-speed rotor PPR, (c) of FIG. 13 is a time series of a twist angle [deg] (a rotation angle difference between the high-speed rotor HSR and the low-speed rotor), (d) of FIG. 13 is a time series of motor torque [Nm], (e) of FIG. 13 is a time series of load torque [Nm], and (f) of FIG. 13 is a time series of torsional torque [Nm] of a joint portion. In the example of FIG. 13, an overload occurs at time t1, and the step-out occurs at time t2.

When the step-out occurs, the magnetic geared motor PDD generates alternating torque having the maximum transmission torque as its amplitude and fluctuating at a frequency proportional to a speed difference between the high-speed rotor HSR and the low-speed rotor PPR. In the related art, the step-out is detected from, for example, the rotation speed deviation or a twist angle between the high-speed rotor HSR and the low-speed rotor PPR. When the step-out is detected, the magnetic geared motor PDD is suddenly braked by applying a regenerative brake or the like. However, since the load machine LD cannot be immediately stopped due to inertia, as in the example of FIG. 13, the low-speed rotor PPR continues to rotate in conjunction with the load machine LD even after the motor torque becomes zero, and there is a possibility that the alternating torque continues. Resonance occurs when the frequency of the alternating torque matches a torsional natural frequency of the rotary shaft or the like. When the resonance grows, as shown in (f) of FIG. 13, excessive torsional torque is generated at the joint JT, and there is a possibility that various devices (the joint JT or peripheral mechanical components) of the drive system 9 are damaged. Therefore, it is important to have an interlock logic for safely stopping the magnetic geared motor PDD and the load machine LD such that the devices are not damaged.

For example, Patent Document 1 describes interlock control for an emergency brake of a train.

### Citation List

### Patent Document

Patent Document 1: Japanese Patent No. 6254576

### SUMMARY OF INVENTION

### Technical Problem

In the drive system 9, it is necessary to safely stop the magnetic geared motor PDD and the load machine LD not only when the step-out occurs but also when a device essential for controlling the magnetic geared motor PDD, such as a sensor or an inverter, fails, such that the mechanical components are not damaged. However, the related art does not sufficiently consider a mechanism for safely stopping the magnetic geared motor PDD and the load machine LD. In addition, it is desirable to attempt to resolve (resynchronize) the step-out of the magnetic geared motor before stopping the magnetic geared motor PDD and the load machine LD, and to suppress a reduction in the operating rate of the drive system 9.

An object of the present disclosure is to provide a protection device, a drive system, a protection method, and a program capable of resynchronizing a magnetic geared motor and suppressing a reduction in an operating rate of the drive system.

### Solution to Problem

An aspect of the present disclosure relates to a protection device for a drive system including a magnetic geared motor including a high-speed rotor and a low- speed rotor configured to rotationally drive a load machine by rotating in synchronization with the high-speed rotor, an inverter configured to supply a current to the magnetic geared motor, a rotation angle sensor configured to measure the rotation angle and the rotation speed of each of the high-speed rotor and the low-speed rotor, a current sensor configured to measure the current flowing from the inverter to the magnetic geared motor, a main control device configured to output a torque command for controlling torque of the magnetic geared motor, and an inverter control device configured to output a current command for adjusting the current supplied by the inverter, based on the torque command, the measurement value of the rotation angle, and the measurement value of the current, the protection device including: a determination unit configured to determine, based on input signals input from the magnetic geared motor, the inverter, the rotation angle sensor, the current sensor, the main control device, and the inverter control device, whether a failure mode of the drive system is a major failure indicating a failure that disables control of the magnetic geared motor, or a minor failure indicating a failure that enables control of the magnetic geared motor; and a resynchronization processing unit configured to resynchronize rotation of the high-speed rotor and rotation of the low-speed rotor when the failure mode is determined to be the major failure and only step-out has occurred.

Another aspect of the present disclosure relates to a drive system including: a magnetic geared motor including a high-speed rotor and a low-speed rotor configured to rotationally drive a load machine by rotating in synchronization with the high-speed rotor; an inverter configured to supply a current to the magnetic geared motor; a rotation angle sensor configured to measure the rotation angle and the rotation speed of each of the high-speed rotor and the low-speed rotor; a current sensor configured to measure the current flowing from the inverter to the magnetic geared motor; a main control device configured to output a torque command for controlling torque of the magnetic geared motor; and an inverter control device configured to output a current command for adjusting the current supplied by the inverter, based on the torque command, the measurement value of the rotation angle, and the measurement value of the current; a determination unit configured to determine, based on input signals input from the magnetic geared motor, the inverter, the rotation angle sensor, the current sensor, the main control device, and the inverter control device, whether a failure mode is a major failure indicating a failure that disables control of the magnetic geared motor, or a minor failure indicating a failure that enables control of the magnetic geared motor; and a resynchronization processing unit configured to resynchronize rotation of the high-speed rotor and rotation of the low-speed rotor when the failure mode is determined to be the major failure and only step-out has occurred.

Still another aspect of the present disclosure relates to a protection method for a drive system including a magnetic geared motor including a high-speed rotor and a low-speed rotor configured to rotationally drive a load machine by rotating in synchronization with the high-speed rotor, an inverter configured to supply a current to the magnetic geared motor, a rotation angle sensor configured to measure the rotation angle and the rotation speed of each of the high-speed rotor and the low-speed rotor, a current sensor configured to measure the current flowing from the inverter to the magnetic geared motor, a main control device configured to output a torque command for controlling torque of the magnetic geared motor, and an inverter control device configured to output a current command for adjusting the current supplied by the inverter, based on the torque command, the measurement value of the rotation angle, and the measurement value of the current, the protection method including: a step of determining, based on input signals input from the magnetic geared motor, the inverter, the rotation angle sensor, the current sensor, the main control device, and the inverter control device, whether a failure mode of the drive system is a major failure indicating a failure that disables control of the magnetic geared motor, or a minor failure indicating a failure that enables control of the magnetic geared motor; and a step of resynchronizing rotation of the high-speed rotor and rotation of the low-speed rotor when the failure mode is determined to be the major failure and only step-out has occurred.

Still another aspect of the present disclosure relates to a program causing a protection device for a drive system including a magnetic geared motor including a high-speed rotor and a low-speed rotor configured to rotationally drive a load machine by rotating in synchronization with the high-speed rotor, an inverter configured to supply a current to the magnetic geared motor, a rotation angle sensor configured to measure the rotation angle and the rotation speed of each of the high-speed rotor and the low-speed rotor, a current sensor configured to measure the current flowing from the inverter to the magnetic geared motor, a main control device configured to output a torque command for controlling torque of the magnetic geared motor, and an inverter control device configured to output a current command for adjusting the current supplied by the inverter, based on the torque command, the measurement value of the rotation angle, and the measurement value of the current, to execute: a step of determining, based on input signals input from the magnetic geared motor, the inverter, the rotation angle sensor, the current sensor, the main control device, and the inverter control device, whether a failure mode of the drive system is a major failure indicating a failure that disables control of the magnetic geared motor, or a minor failure indicating a failure that enables control of the magnetic geared motor; and a step of resynchronizing rotation of the high-speed rotor and rotation of the low-speed rotor when the failure mode is determined to be the major failure and only step-out has occurred.

### Advantageous Effects of Invention

According to the above aspects, the magnetic geared motor is resynchronized, and the reduction in the operating rate of the drive system is suppressed.

### BRIEF DESCRIPTION OF DRAWINGS

[FIG. 1] A diagram showing the overall configuration of a drive system according to a first embodiment.
[FIG. 2] A block diagram showing the functional configuration of a protection device according to the first embodiment.
[FIG. 3] A diagram showing an example of a failure mode according to the first embodiment.
[FIG. 4] A flowchart showing an example of interlock control of the drive system according to the first embodiment.
[FIG. 5] A diagram showing step-out limit information according to the first embodiment.
[FIG. 6] A diagram showing a function of the drive system according to the first embodiment.
[FIG. 7] A first diagram (related art) showing a measurement value when a major failure has occurred.
[FIG. 8] A diagram showing an example of load characteristics.
[FIG. 9] A second diagram (technology of the first embodiment) showing a measurement value when the major failure has occurred.
[FIG. 10] A block diagram showing the functional configuration of a protection device according to a second embodiment.
[FIG. 11] A flowchart showing interlock control of a drive system according to the second embodiment.
[FIG. 12] A diagram showing a configuration of a drive system in the related art.
[FIG. 13] A diagram showing an example of a measurement value when step-out has occurred in the related art.

### DESCRIPTION OF EMBODIMENTS

### <First Embodiment>

Hereinafter, an embodiment will be described in detail with reference to the accompanying drawings.

### (Overall Configuration of Drive System)

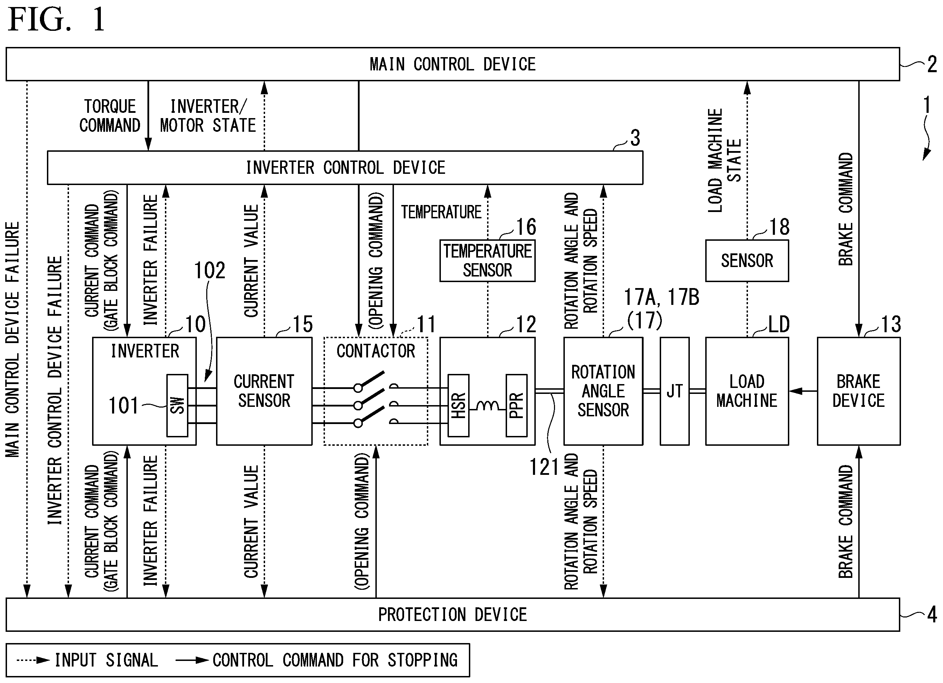

FIG. 1 is a diagram showing the overall configuration of a drive system according to the first embodiment.

A drive system 1 is a system for driving a load machine LD. The drive system 1 is applied to, for example, a propulsion device for a vehicle (such as a train) or a marine vessel, a wind turbine for wind power generation, and the like. Examples of the load machine LD include a wheel, a fan, and a propeller. Depending on a target to which the drive system 1 is applied, a configuration (contactor 11) described by a broken line may not be used. In such a case, this configuration may be omitted.

As shown in FIG. 1, the drive system 1 includes an inverter 10, a contactor 11, a magnetic geared motor 12, a brake device 13, a main control device 2, an inverter control device 3, and a protection device 4.

The inverter 10 includes a semiconductor switch 101 having a plurality of switching elements such as an insulated gate bipolar transistor (IGBT) and a metal- oxide-semiconductor field effect transistor (MOSFET). The inverter 10 switches a switching pattern of the semiconductor switch 101 and the like and supplies a current commanded by the inverter control device 3 to the magnetic geared motor 12.

The contactor 11 is provided between the inverter 10 and the magnetic geared motor 12. The contactor 11 opens and closes a power line 102 between the inverter 10 and the magnetic geared motor 12 to cut off the current flowing to the magnetic geared motor 12 or to supply the current to the magnetic geared motor 12. The contactor 11 may not be used except in, for example, specific applications (for example, a propulsion device for a train). In such a case, the drive system 1 may omit the contactor 11.

The magnetic geared motor 12 includes a high-speed rotor HSR and a low-speed rotor PPR. When the current supplied from the inverter 10 flows to a winding (not shown) of a stator, the high-speed rotor HSR rotates due to a magnetomotive force of the winding. The motor torque (electrical torque) applied to the high-speed rotor HSR is transmitted to the low-speed rotor PPR via a magnetic spring. As a result, the low-speed rotor PPR rotates in synchronization with the high-speed rotor HSR at a predetermined reduction ratio. In this case, the low-speed rotor PPR rotates at a lower speed than the high-speed rotor HSR in accordance with the reduction ratio. In addition, the load machine LD is connected to a rotary shaft 121 of the low-speed rotor PPR via a joint JT. The output torque (magnetic spring torque) generated by the magnetic geared motor 12 is transmitted to the load machine LD through the rotary shaft 121. As a result, the load machine LD rotates.

The brake device 13 is a device for braking the load machine LD. For example, when the drive system 1 is applied to a propulsion device for a vehicle, the brake device 13 is a mechanical brake mechanism that uses friction, such as a tread brake or a disc brake. Further, when the drive system 1 is applied to a fluid machine such as a propulsion device of a marine vessel or a wind turbine, the brake device 13 is, for example, a mechanism for changing a blade angle of a variable-pitch propeller, or a control valve for reducing or shutting off a flow rate of a working fluid.

Further, a current sensor 15 is provided on the power line 102 between the inverter 10 and the magnetic geared motor 12. The current sensor 15 measures a motor current supplied to the magnetic geared motor 12. The magnetic geared motor 12 is provided with a temperature sensor 16. The temperature sensor 16 measures, for example, a temperature of the winding of the magnetic geared motor 12. The magnetic geared motor 12 is provided with a rotation angle sensor 17. The rotation angle sensor 17 includes a high-speed side rotation angle sensor 17A that measures the rotation angle and the rotation speed of the high-speed rotor HSR, and a low-speed side rotation angle sensor 17B that measures the rotation angle and the rotation speed of the low-speed rotor PPR (rotary shaft 121). The load machine LD is provided with a sensor 18. The sensor 18 is, for example, a rotation angle sensor, and measures the rotation angle and the rotation speed of the load machine LD.

The main control device 2 calculates torque to be output by the magnetic geared motor 12 based on a rotation speed command given from a host device (not shown) and the measurement value of the rotation speed of the magnetic geared motor 12, and outputs a torque command to the inverter control device 3.

The inverter control device 3 outputs a current command for obtaining motor torque commanded from the main control device 2 based on the torque command input from the main control device 2, the motor current (measurement value of the current sensor 15) supplied to the magnetic geared motor 12, and the measurement values of the rotation angles (measurement values of the rotation angle sensor 17) of the high-speed rotor HSR and the low-speed rotor PPR of the magnetic geared motor 12. The inverter 10 generates a voltage based on a command received from the inverter control device 3 and adjusts the current supplied to the magnetic geared motor 12.

The protection device 4 is a device for safely stopping the magnetic geared motor 12 and the load machine LD when a failure, step-out, or the like occurs in the drive system 1.

### (Functional Configuration of Protection Device)

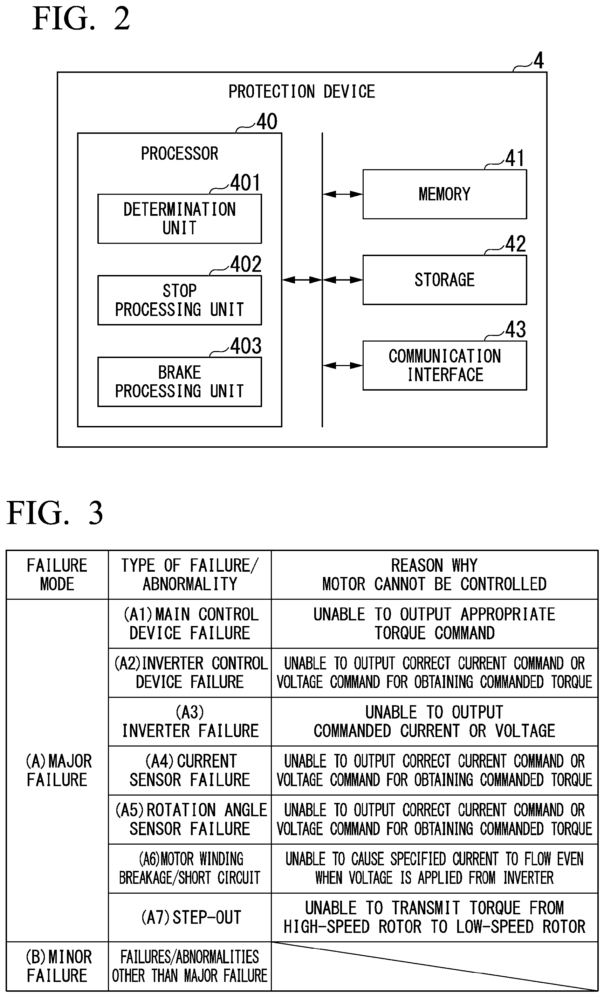

FIG. 2 is a block diagram showing a functional configuration of the protection device according to the first embodiment.

As shown in FIG. 2, the protection device 4 includes a processor 40, a memory 41, a storage 42, and a communication interface 43.

The processor 40 operates in accordance with a predetermined program to function as a determination unit 401, a stop processing unit 402, and a brake processing unit 403.

The determination unit 401 determines a failure mode of the drive system 1 based on input signals input from the magnetic geared motor 12, the inverter 10, the rotation angle sensor 17, the current sensor 15, the main control device 2, and the inverter control device 3. Further, the determination unit 401 determines the failure mode of the drive system 1 based on state notification signals of the main control device 2 and the inverter control device 3. The input signals include state notification signals of the magnetic geared motor 12, the inverter 10, the main control device 2, and the inverter control device 3, sensor signals (measurement values) of the rotation angle sensor 17 and the current sensor 15, and the like.

FIG. 3 is a diagram showing an example of the failure mode according to the first embodiment.

As shown in FIG. 3, the failure mode is classified into two types: (A) a major failure and (B) a minor failure.

### (A) Major Failure

The major failure is a failure or an abnormality in which the rotation speed and the output torque of the magnetic geared motor 12 cannot be arbitrarily controlled. Specifically, the major failure includes the following failures and abnormalities.

### (A1) Failure of Main Control Device 2

When the main control device 2 has failed, an appropriate torque command cannot be output, and thus the magnetic geared motor 12 cannot be controlled. The determination unit 401 determines that the main control device 2 has failed, for example, when the state notification signal indicating the failure is received from the main control device 2 or when a watchdog timer times out.

### (A2) Failure of Inverter Control Device 3

When the inverter control device 3 fails, a correct current command or voltage command for obtaining torque commanded by the main control device 2 cannot be output, and thus the magnetic geared motor 12 cannot be controlled. The determination unit 401 determines that the inverter control device 3 has failed, for example, when the state notification signal indicating the failure is received from the inverter control device 3 or when a watchdog timer times out.

### (A3) Failure of Inverter 10

When the inverter 10 has failed, the current or voltage commanded to the inverter control device 3 cannot be output, and thus the magnetic geared motor 12 cannot be controlled. The determination unit 401 receives the state notification signal indicating the presence or absence of the failure from, for example, a diagnostic device (not shown) provided in the inverter 10, and determines the presence or absence of the failure of the inverter 10 based on the state notification signal.

### (A4) Failure of Current Sensor 15

When the current sensor 15 has failed, the inverter control device 3 cannot output a correct current command or voltage command for obtaining torque commanded by the main control device 2, and thus the magnetic geared motor 12 cannot be controlled. The determination unit 401 determines that the current sensor 15 has failed, for example, when the sensor signal from the current sensor 15 is interrupted.

### (A5) Failure of Rotation Angle Sensor 17

When the rotation angle sensor 17 has failed, the inverter control device 3 cannot output a correct current command or voltage command for obtaining torque commanded by the main control device 2, and thus the magnetic geared motor 12 cannot be controlled. The determination unit 401 determines that the rotation angle sensor 17 has failed, for example, when the sensor signal from the rotation angle sensor 17 is interrupted.

### (A6) Winding Breakage or Short Circuit of Magnetic Geared Motor 12

When a winding breakage or a short circuit occurs in the winding of the magnetic geared motor 12, the current designated for the winding does not flow even when the voltage is applied from the inverter 10, and the magnetic geared motor 12 cannot be controlled. The determination unit 401 monitors a power command output by the inverter control device 3 and the motor current measured by the current sensor 15, and determines that the winding breakage or the short circuit has occurred when the motor current does not flow as commanded even though the inverter 10 is operating normally.

### (A7) Step-out

When the magnetic coupling between the high-speed rotor HSR and the low-speed rotor PPR is released, the motor torque (electrical torque) cannot be transmitted from the high-speed rotor HSR to the low-speed rotor PPR via the magnetic spring, and thus the magnetic geared motor 12 cannot be controlled. In this case, the average value of the magnetic spring torque is zero. However, when the failures (A1) to (A6) have not occurred, the motor torque can be controlled. The determination unit 401 determines whether the step-out has occurred from the measurement values of the rotation speeds of the high-speed rotor HSR and the low-speed rotor PPR by the rotation angle sensor 17. Specifically, the determination unit 401 determines that the step-out has occurred when the rotation speed deviation between the rotation speed of the high-speed rotor HSR converted into the rotation speed of the low-speed rotor PPR based on the reduction ratio and the rotation speed of the low-speed rotor PPR exceeds a predetermined rotation speed threshold value (for example, 10 to 50 rpm), and the rotation angle difference (twist angle) between the high-speed rotor HSR and the low-speed rotor PPR exceeds a predetermined twist angle threshold value (for example, 90 degrees).

### (B) Minor Failure

The minor failure is a failure other than the major failure, and is a failure at a level at which the magnetic geared motor 12 can be controlled even though some kind of failure or abnormality has occurred. For example, the determination unit 401 determines that the minor failure has occurred when the winding temperature of the magnetic geared motor 12 exceeds a temperature threshold value or when a sensor signal from a sensor (temperature sensor 16 or the like) that is not used for controlling the magnetic geared motor 12 is interrupted.

The stop processing unit 402 stops the current flowing from the inverter 10 to the magnetic geared motor 12 when the failure mode is determined to be the major failure. In this case, the stop processing unit 402 outputs a command to turn off (gate-block) the semiconductor switch 101 to the inverter 10. In a case where the contactor 11 is provided, the stop processing unit 402 may further output a command to open the contactor 11. The stop processing unit 402 may execute the same processing as in the case of the major failure even when an emergency stop operation is performed by an operator of the drive system 1.

In addition, when the failure mode is determined not to be the major failure (determined to be the minor failure), the stop processing unit 402 gradually adjusts the torque command or the current command until the motor torque is equal to or less than a specified torque value that is specified in advance. The stop processing unit 402 may execute the same processing as in a case of the minor failure even when a normal stop operation is performed by the operator of the drive system 1.

The brake processing unit 403 outputs the brake command to the brake device 13 when, after the processing of the stop processing unit 402, the motor torque is equal to or less than a specified torque value that is specified in advance or when the current flowing through the magnetic geared motor 12 is equal to or less than a specified current value that is specified in advance. The brake processing unit 403 may execute the same processing even when the normal stop operation or the emergency stop operation is performed by the operator of the drive system 1.

In addition, the predetermined program executed by the processor 40 is stored in a computer-readable recording medium. Further, the computer-readable recording medium refers to a magnetic disk, a magneto-optical disk, a CD-ROM, a DVD-ROM, a semiconductor memory, or the like. Furthermore, the computer program may be distributed to a computer via a communication line, and the computer that has received the distribution may execute the program. Moreover, the program may be for realizing a part of the above-described functions. Furthermore, the program may be a so-called difference file (difference program) that can implement the above-described functions in combination with the program that has already been recorded in the computer system.

The memory 41 has a memory area required for the operation of the processor 40.

The storage 42 is a so-called auxiliary storage device, and is, for example, a hard disk drive (HDD), a solid state drive (SSD), or the like. The storage 42 stores data acquired, generated, and referred to by each unit of the processor 40 during processing.

The communication interface 43 transmits and receives signals (control commands, measurement values, state notification signals, and the like) to and from each device.

### (Processing Flow of Protection Device)

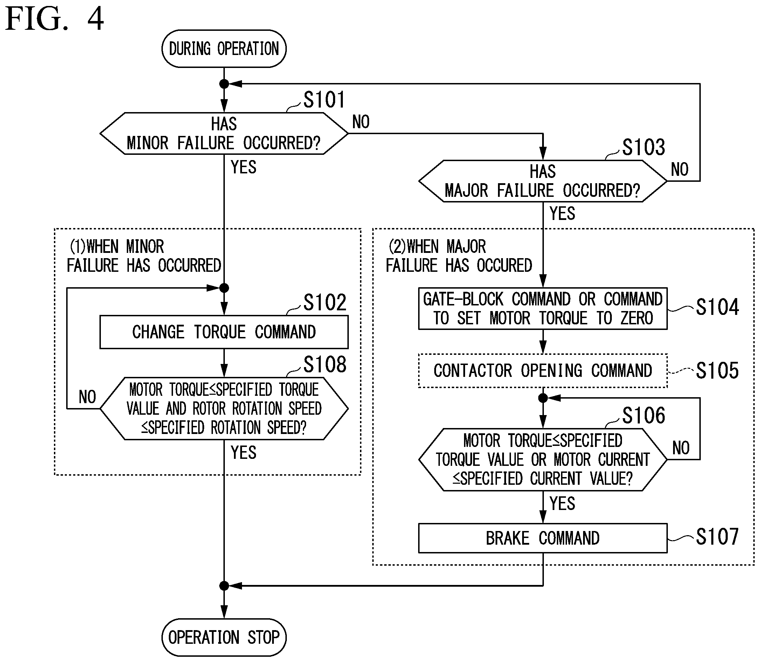

FIG. 4 is a flowchart showing an example of the interlock control of the drive system according to the first embodiment.

Hereinafter, the flow of the interlock control of the drive system 1 will be described with reference to FIG. 4. In the present embodiment, the protection device 4 executes the interlock control of the drive system 1.

First, the determination unit 401 determines whether or not the minor failure has occurred in the drive system 1 (step S101). When the minor failure has occurred (step S101; YES), the protection device 4 executes processing when the minor failure has occurred (step S102). Details of the processing when the minor failure has occurred will be described later.

When the minor failure has not occurred (step S101; NO), the determination unit 401 further determines whether or not the major failure has occurred in the drive system 1 (step S103). When the major failure has not occurred (step S103; NO), the protection device 4 returns to step S101 and continues to perform monitoring of the drive system 1. On the other hand, when the major failure has occurred (step S103; YES), the protection device 4 executes processing when the major failure has occurred (steps S104 to S107). Details of the processing when the major failure has occurred will be described later.

### (1) Processing When Minor Failure Has Occurred

First, processing in a case where the minor failure has occurred (step S101; YES) will be described. The stop processing unit 402 performs processing of gradually changing the torque command such that the rotation of the magnetic geared motor 12 and the rotation of the load machine LD are safely and promptly stopped (the torque becomes zero) (step S102).

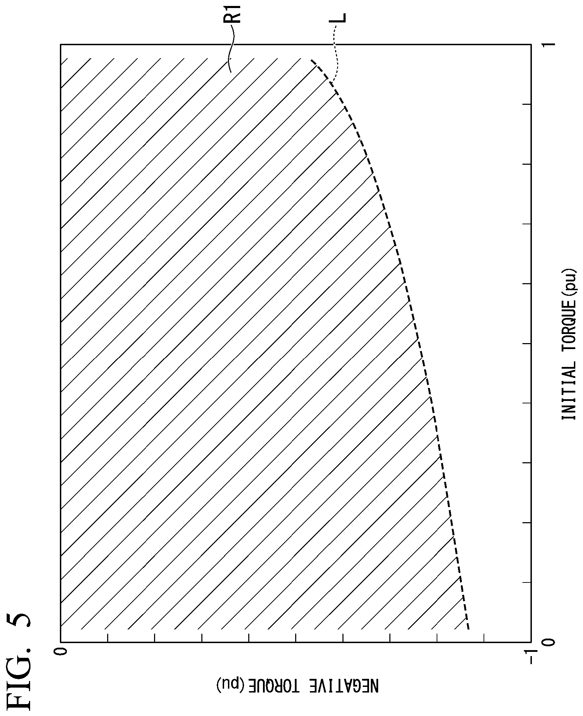

FIG. 5 is a diagram showing an example of step-out limit information according to the first embodiment.

When the minor failure has occurred and an attempt is made to stop rotation of the magnetic geared motor 12 immediately and a large negative torque (regenerative braking) is abruptly applied to the magnetic geared motor 12, step-out may instead occur. This is due to the magnetic spring characteristics of the magnetic geared motor 12. The negative torque leading to step-out is represented by, for example, a relationship between the immediately preceding motor torque (initial torque) (horizontal axis) and the negative torque (vertical axis) as shown in FIG. 5. The magnetic geared motor 12 is stepped out when the negative torque (motor torque less than the step-out limit L) greater than step-out limit L indicated by a broken line in FIG. 5 is applied. Therefore, in order to suppress the step-out, it is necessary to keep the motor torque to be commanded to the magnetic geared motor 12 within a stable region R1 in which the motor torque is equal to or greater than the step-out limit L.

Further, the step-out limit L changes in accordance with a ratio between the moments of inertia of the high-speed rotor HSR and the load machine LD. Specifically, as the moment of inertia of the high-speed rotor HSR becomes smaller than the moment of inertia of the load machine LD, it is less likely to cause the step-out even when a large negative torque is applied. In addition, the moment of inertia of the load machine LD may change in accordance with a state of the load machine LD (for example, in a case of a vehicle, a wheel slip state, a weight of a load, or the like).

Since the moment of inertia ratio changes in accordance with the change in the moment of inertia of the load machine LD, the step-out limit L also changes. Here, the moment of inertia ratio is "moment of inertia of high-speed rotor HSR/moment of inertia of low-speed rotor PPR + moment of inertia of load machine LD". Therefore, in step S102, the stop processing unit 402 needs to determine an appropriate step-out limit L in accordance with the moment of inertia ratio, and adjust the torque command such that a large negative torque can be applied to the magnetic geared motor 12 within a range in which the magnetic geared motor 12 is not stepped out.

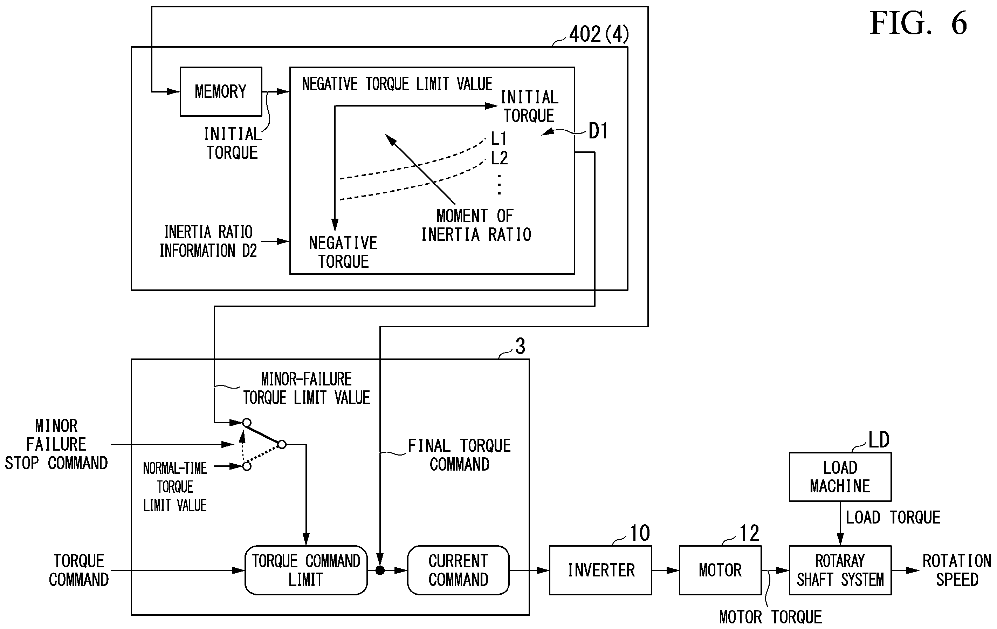

FIG. 6 is a diagram showing a function of the drive system according to the first embodiment.

Specific processing (step S102) of the stop processing unit 402 when the minor failure has occurred will be described with reference to FIG. 6. As shown in FIG. 6, when the minor failure has occurred, the stop processing unit 402 first outputs a minor-failure stop command to the inverter control device 3. The inverter control device 3 receives the minor-failure stop command and switches a limit value of the torque command from a normal-time torque limit value to the minor-failure torque limit value.

Further, the stop processing unit 402 stores step-out limit information D1 (a graph, a table, or the like shown in FIG. 5) in which the step-out limits L1, L2, and the like for each moment of inertia ratio are set in advance by a test, a simulation, or the like. Then, the stop processing unit 402 obtains the negative torque limit value (minor-failure torque limit value) based on the step-out limit information D1, inertia ratio information D2 of the high-speed rotor HSR and the load machine LD, and the initial torque (value of the previous final torque command).

The inertia ratio information D2 is a moment of inertia ratio obtained by "moment of inertia of high-speed rotor HSR/moment of inertia of low-speed rotor PPR + moment of inertia of load machine LD". The moments of inertia of the high-speed rotor HSR and the low-speed rotor PPR are values obtained from the specifications of the magnetic geared motor 12 or the like. The moment of inertia of the load machine LD is a value that is sequentially acquired based on the specifications of the load machine LD and the state of the load machine LD. A method for acquiring the moment of inertia of the load machine LD may use various known techniques.

The stop processing unit 402 outputs the calculated negative torque limit value to the inverter control device 3. The inverter control device 3 generates a final torque command that is limited to be equal to or greater than the negative torque limit value received from the stop processing unit 402 with respect to the torque command (regenerative braking amount) for promptly stopping the magnetic geared motor 12. The torque command (regenerative braking amount) for stopping the magnetic geared motor 12 may be, for example, the torque command (regenerative braking amount) given to the inverter control device 3 by the stop processing unit 402. In another embodiment, the stop processing unit 402 may generate the final torque command, and output the final torque command to the inverter control device 3. Further, the inverter control device 3 adjusts the current command output to the inverter 10 such that the motor torque matches the final torque command.

In addition, the stop processing unit 402 acquires the final torque command generated by the inverter control device 3, and records the final torque command as the initial torque to be used in the next calculation of the load torque limit value.

Next, returning to FIG. 4, when the motor torque is equal to or less than the specified torque value and the rotation speed of the high-speed rotor HSR and the rotation speed of the low-speed rotor PPR are each equal to or less than a specified rotation speed (step S108; YES), the stop processing unit 402 considers that the drive system 1 is in the operation stopped state and ends the processing. The motor torque used for the determination here is an estimation value estimated from the motor current measured by the current sensor 15.

On the other hand, when the motor torque is not equal to or less than the specified torque value or when the rotation speed of the high-speed rotor HSR and the rotation speed of the low-speed rotor PPR are not equal to or less than the specified rotation speed (step S108; NO), the stop processing unit 402 returns to step S102.

As described above, the stop processing unit 402 can achieve both the suppression of the step-out and the sudden braking by calculating the negative torque limit value from time to time and limiting the regenerative braking amount such that the motor torque does not change sharply when the minor failure has occurred. As a result, the rotation speed of the high-speed rotor HSR and the rotation speed of the low-speed rotor PPR can be reduced in conjunction with each other, and the load machine LD can be safely stopped together with the magnetic geared motor 12.

FIG. 6 shows an example in which the stop processing unit 402 causes the magnetic geared motor 12 to perform sudden braking by the regenerative braking (negative torque), but the present disclosure is not limited to this. In another embodiment, the stop processing unit 402 may gradually reduce the torque command at a predetermined reduction rate such that the motor torque gradually approaches 0, instead of applying the regenerative braking to the magnetic geared motor 12. In addition, the stop processing unit 402 may gradually reduce the current command at a predetermined reduction rate instead of the torque command. In this case, the inverter control device 3 controls the inverter 10 based on the current command output from the stop processing unit 402. Further, the current command may be directly output from the stop processing unit 402 to the inverter 10. For example, when it is not necessary to promptly stop the magnetic geared motor 12 and the load machine LD depending on the required specifications of the drive system 1 or the state of the minor failure, the magnetic geared motor 12 and the load machine LD can be safely stopped in conjunction with each other only by performing such simple processing of gradually reducing the torque command or the current command.

### (2) Processing When Major Failure Has Occurred

Next, the processing when the major failure has occurred (step S103; YES) will be described. When the major failure has occurred, the stop processing unit 402 first performs processing of setting the motor torque to zero (steps S104 and S105).

Specifically, when the inverter control device 3 has failed, the stop processing unit 402 outputs the gate block command to the inverter 10 (step S104). Then, the inverter 10 turns off all the switching elements of the semiconductor switch 101 to cut off the motor current. By forcibly setting the motor current to zero in this way, the motor torque can be set to zero.

In addition, when the inverter control device 3 is normally operating, the stop processing unit 402 may output the torque command for setting the motor torque to zero to the inverter control device 3 instead of the gate block command (step S104). In this case, the stop processing unit 402 may output the current command for setting the motor current to zero instead of the torque command.

In a case where the drive system 1 includes the contactor 11, the stop processing unit 402 outputs the contactor opening command to the contactor 11 (step S105). In this case, the contactor 11 opens the power line 102 between the inverter 10 and the magnetic geared motor 12 and cuts off the motor current. In this way, even when the inverter 10 has failed, the motor current can be cut off.

Next, the brake processing unit 403 determines whether or not the motor torque is equal to or less than the specified torque value (step S106). The motor torque used for the determination here is an estimation value estimated from the motor current measured by the current sensor 15. The brake processing unit 403 may determine whether or not the motor current is equal to or less than the specified current value instead of the motor torque. When the motor torque (or the motor current) is not equal to or less than the specified value (step S106; NO), the brake processing unit 403 returns to step S106 and continues to monitor the motor torque (or the motor current). On the other hand, when the motor torque (or the motor current) is equal to or less than the specified value (step S106; YES), the brake processing unit 403 outputs the brake command to the brake device 13 (step S107).

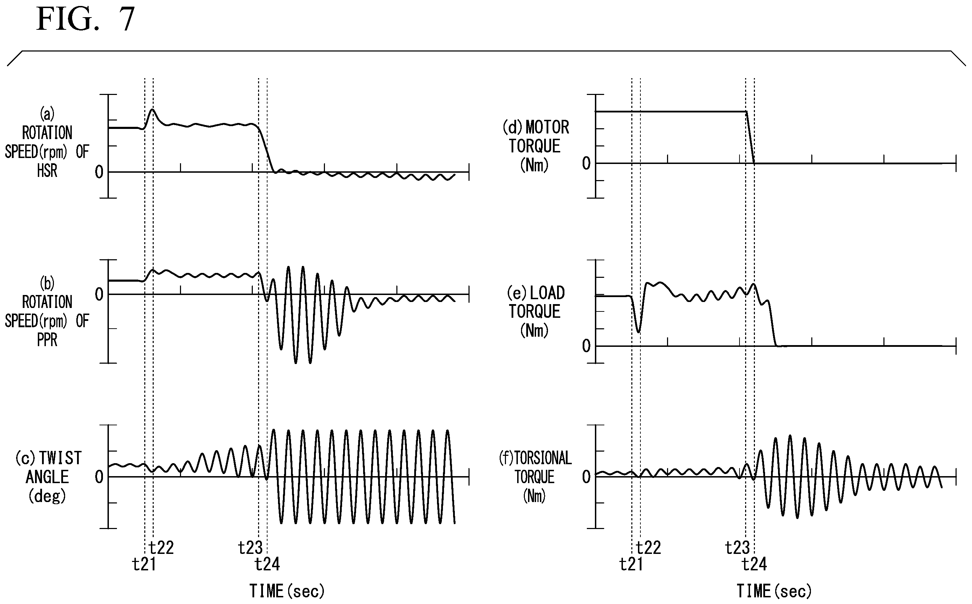

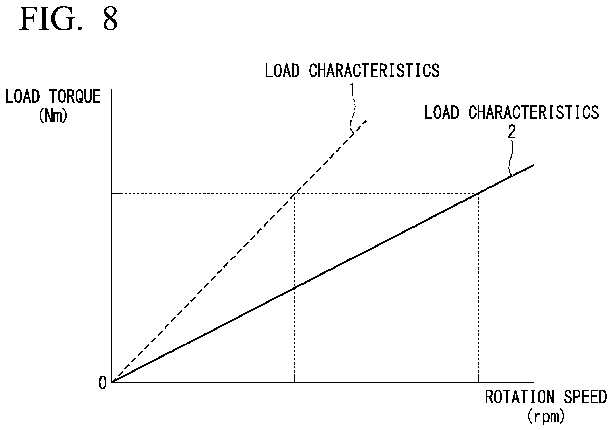

In addition, the operation of the interlock control when the major failure has occurred will be described. First, as a comparative example, an example of a case where the control in the related art (the operation stop of the motor) is performed when the major failure (step-out) has occurred will be described with reference to FIGS. 7 and 8.

FIG. 7 is a first diagram (related art) showing an example of the measurement value when the major failure has occurred. FIG. 8 is a diagram showing an example of the load characteristics.

FIG. 7 shows an example of the time series of the measurement value when the step-out has occurred. (a) of FIG. 7 is a time series of the rotation speed [rpm] of the high-speed rotor HSR, (b) of FIG. 7 is a time series of the rotation speed [rpm] of the low-speed rotor PPR, (c) of FIG. 7 is a time series of a twist angle [deg] (a rotation angle difference between the high-speed rotor HSR and the low-speed rotor), (d) of FIG. 7 is a time series of a motor torque [Nm], (e) of FIG. 7 is a time series of a load torque [Nm], and (f) of FIG. 7 is a time series of a torsional torque [Nm] of a joint portion. Further, as shown in FIG. 8, the load machine LD has a plurality of load characteristics 1, 2, and the like.

For example, the load characteristics may temporarily change in a case where the load machine LD is a wheel and the wheel slips due to dirt or the like on a track (road surface). For example, as shown in (e) of FIG. 7, it is assumed that the load characteristics are changed from the load characteristic 1 (FIG. 8) to the load characteristic 2 (FIG. 8) at time t21. In addition, it is assumed that the load characteristics are returned from the load characteristic 2 to the load characteristic 1 at time t22. Here, after switching back again to load characteristic 1 at time t22, the primary torsional vibration natural frequency is excited, causing the drive system to become unstable. As a result, as shown in (c) of FIG. 7, a phase difference has occurred in the rotation speed fluctuation of the high-speed rotor HSR and the low-speed rotor PPR, and the fluctuation of the twist angle is increased. As a result, in the example of FIG. 7, it is determined that the step-out has occurred because the rotation speed deviation and the rotation angle difference (twist angle) between the high- speed rotor HSR and the low-speed rotor PPR exceed the rotation speed threshold value and the twist angle threshold value, respectively, at time t23. In actual operation, the threshold for determining step-out may be set with a margin, and thus step-out is not always actually occurring at time t23. In the example of FIG. 7, by providing a margin for the threshold, a state immediately before step-out (pre-step-out state) is detected at time t23.

In addition, for example, it is assumed that only the control of simply stopping the motor (setting the motor torque to zero) is performed at time t23. In this case, the rotation speed of the high-speed rotor HSR gradually approaches zero. On the other hand, the low-speed rotor PPR continues to rotate due to the inertia of the load machine LD. In this case, even when the motor torque is set to zero, the characteristics are not immediately switched to be linked with the rotation of the low-speed rotor PPR due to the inertia of the high-speed rotor HSR itself. Therefore, the increase in the rotation speed deviation and the twist angle between the high-speed rotor HSR and the low-speed rotor PPR has not stopped, and the step-out has actually occurred at time t24 (step-out state). Since the load torque decreases only in accordance with the reduction in the rotation speed of the low-speed rotor PPR, excessive torsional torque is generated after time t24 in the example of FIG. 7. This is because step-out generates an alternating torque having, as its amplitude, the maximum transmission torque between the high-speed rotor and the low-speed rotor, and because the frequency of the alternating torque increases as the rotational speed deviation between the high-speed rotor HSR and the low-speed rotor PPR (load side) increases, thereby exciting a natural mode of the rotating shaft system.

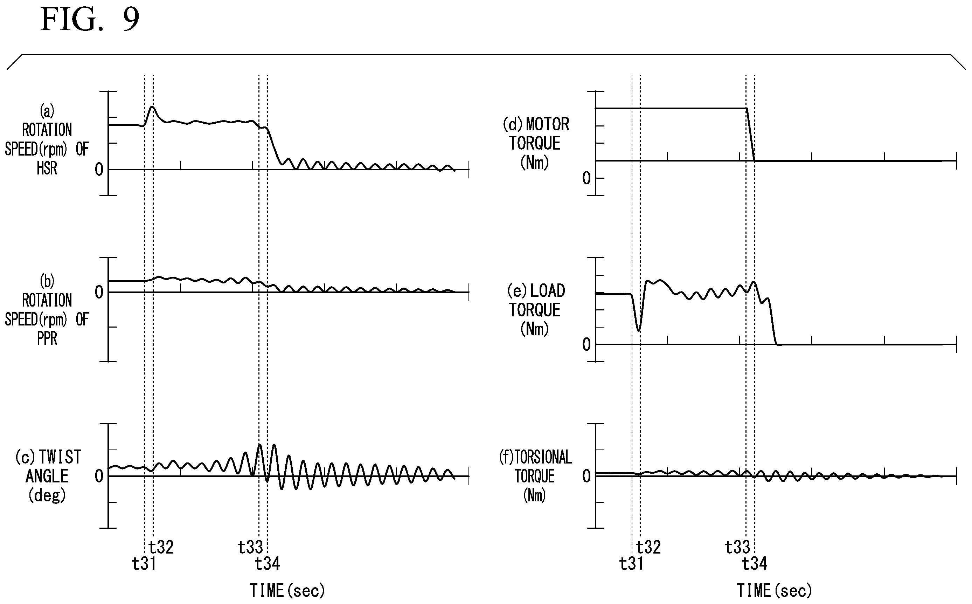

As described above, in order to suppress the transition from the pre-step-out state to the step-out state, a series of interlock controls shown in FIG. 4 are performed in the present embodiment. The operation of the interlock control will be described with reference to FIG. 9.

FIG. 9 is a second diagram (technology of the first embodiment) showing an example of the measurement value when the major failure has occurred.

FIG. 9 shows a time series of the measurement value when the step-out (pre-step-out) is detected due to a temporary change in the load characteristics similar to that in FIG. 7, and the protection device 4 according to the present embodiment performs the interlock control (FIG. 4). (a) of FIG. 9 is a time series of the rotation speed [rpm] of the high-speed rotor HSR, (b) of FIG. 9 is a time series of the rotation speed [rpm] of the low-speed rotor PPR, (c) of FIG. 9 is a time series of a twist angle [deg] (the rotation angle difference between the high-speed rotor HSR and the low-speed rotor), (d) of FIG. 9 is a time series of a motor torque [Nm], (e) of FIG. 9 is a time series of a load torque [Nm], and (f) of FIG. 9 is a time series of a torsional torque [Nm] of a joint portion.

For example, as shown in FIG. 9(e), it is assumed that the load characteristics are changed from the load characteristic 1 (FIG. 8) to the load characteristic 2 (FIG. 8) at time t31. In addition, it is assumed that the load characteristics are returned from the load characteristic 2 to the load characteristic 1 at time t32. Here, as in the example of FIG. 7, the drive system is unstable due to the temporary change in the load characteristics in the example of FIG. 9. As a result, as shown in (c) of FIG. 9, at time t33, the step-out (pre-step-out) is detected because the rotation speed deviation and the rotation angle difference (twist angle) between the high-speed rotor HSR and the low-speed rotor PPR exceed the rotation speed threshold and the twist angle threshold, respectively. The determination unit 401 determines that the step-out (major failure) has occurred at time t33 (step S103; YES).

In this case, the stop processing unit 402 outputs, for example, the torque command to set the motor torque to zero to the inverter control device 3 (step S104). The inverter control device 3 performs control of stopping the supply of the motor current and setting the motor torque to zero.

Although the determination unit 401 determines at time t33 that step-out has occurred, as described above, since the threshold is set with a margin in actual operation, step-out is not always actually occurring at that time. Here, as in the example of FIG. 7, it is assumed that, at time t33, the actual step-out state has not been reached, and the state is immediately before step-out occurs (pre-step-out state).

As described with reference to FIG. 7, it may be difficult to suppress the transition from the pre-step-out state to the step-out state only by simply setting the motor torque to zero. Therefore, it is considered to set the motor torque to zero and apply a brake to the load machine. However, when a brake is applied to the load machine in the pre-step-out state (actually, a state in which the step-out has not occurred) and a state in which the motor torque remains, there is a possibility that the step-out may be caused due to the same operation as applying an overload. Therefore, a timing of applying the brake to the load machine is also important.

In consideration of these, the brake processing unit 403 according to the present embodiment waits without outputting the brake command until the motor torque (or the motor current) is sufficiently reduced (step S106; NO). In addition, at time t34, when it is detected that the motor torque is equal to or less than the specified torque value (or the motor current is equal to or less than the specified current value) (step S106; YES), the brake command is output to the brake device 13 (step S107). As a result, as shown in (c) and (f) of FIG. 9, the twist angle and the torsional torque gradually converge to zero, and the motor 12 and the load machine LD can be safely stopped in conjunction with each other.

### (Effects)

As described above, the protection device 4 according to the present embodiment includes the determination unit 401 that determines whether the failure mode of the drive system 1 is the major failure or the minor failure, the stop processing unit 402 that stops the motor current when it is determined that the failure mode is the major failure, and the brake processing unit 403 that outputs the brake command to the brake device 13 when, after the processing of stopping the motor current is performed, the motor current becomes equal to or less than the specified current value that is specified in advance or the motor torque becomes equal to or less than the specified torque value that is specified in advance.

In this way, the protection device 4 can safely stop the magnetic geared motor 12 and the load machine LD in conjunction with each other when the major failure has occurred. Further, even when the pre-step-out state is detected as the major failure, the protection device 4 can safely stop the magnetic geared motor 12 and the load machine LD while suppressing the actual step-out of the magnetic geared motor 12.

In addition, when it is determined that the failure mode is the minor failure, the stop processing unit 402 calculates the negative torque limit value based on the step-out limit information D1 representing the relationship between the initial torque, which is the previous torque command, and the negative torque, which is the step-out limit L, until the motor torque becomes equal to or less than the specified torque value that is specified in advance, and changes the torque command to an amount of regenerative braking that does not exceed the negative torque limit value.

In this way, the protection device 4 can achieve both the suppression of the step-out and the sudden braking when the minor failure has occurred. As a result, the rotation speed of the high-speed rotor HSR and the rotation speed of the low-speed rotor PPR can be reduced in conjunction with each other, and the load machine LD can be safely stopped together with the magnetic geared motor 12.

In addition, when it is determined that the failure mode is the minor failure, the stop processing unit 402 may gradually decrease the torque command or the current command at a predetermined reduction rate until the motor torque becomes equal to or less than the specified torque value that is specified in advance.

In this manner, the protection device 4 can safely stop the magnetic geared motor 12 and the load machine LD in conjunction with each other by performing only simple processing.

### <Second Embodiment>

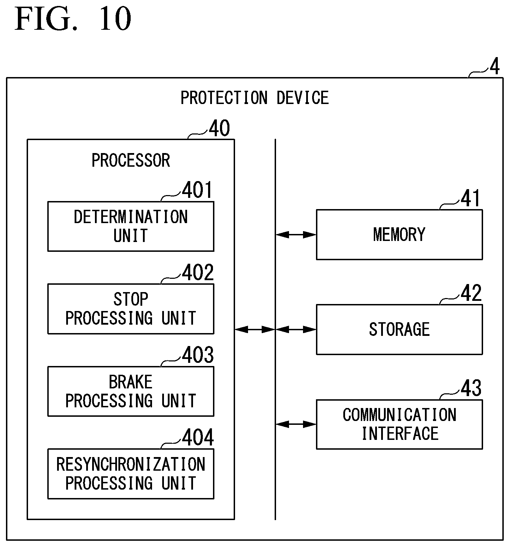

Next, the second embodiment will be described with reference to FIGS. 10 to 11. The same reference numerals are assigned to the components common to the above embodiment, and thus detailed description thereof will be omitted.

In the first embodiment, an example of performing control of stopping the magnetic geared motor 12 and the load machine LD when the major failure has occurred has been described. On the other hand, the protection device 4 according to the present embodiment attempts to resynchronize the high-speed rotor HSR and the low-speed rotor PPR in a case where the magnetic geared motor 12 can be controlled (that is, only the step-out has occurred) even when the major failure has occurred.

FIG. 10 is a block diagram showing a functional configuration of the protection device according to the second embodiment.

As shown in FIG. 10, the protection device 4 according to the present embodiment further includes a resynchronization processing unit 404. The resynchronization processing unit 404 resynchronizes the rotation of the high-speed rotor HSR and the rotation of the low-speed rotor PPR when the failure mode is the major failure and only the step-out has occurred.

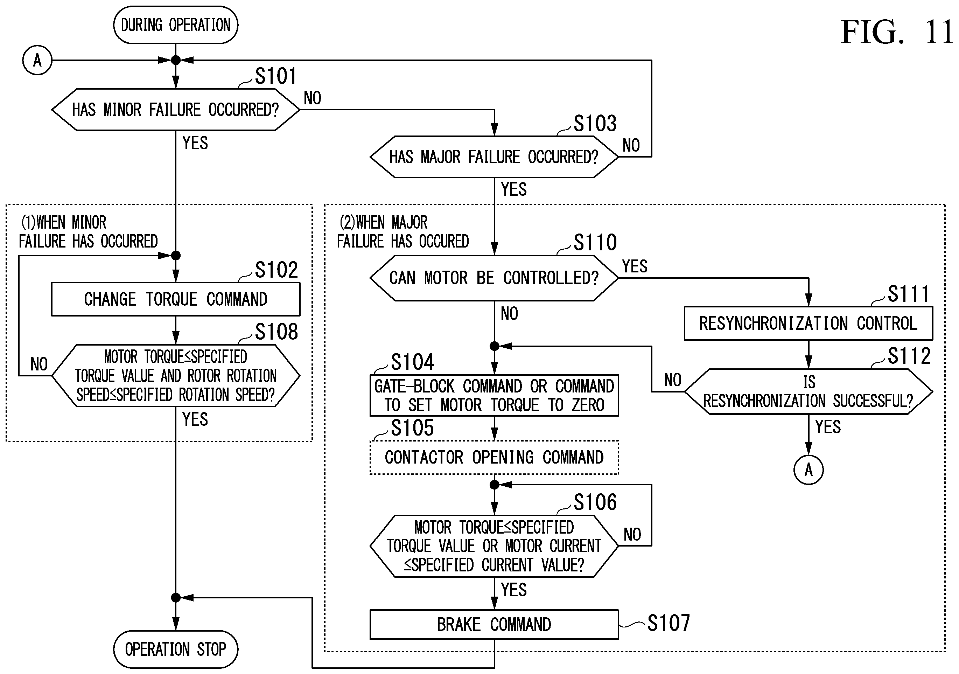

FIG. 11 is a flowchart showing an example of the interlock control of the drive system according to the second embodiment.

As shown in FIG. 11, the interlock control according to the present embodiment is obtained by adding processing of steps S110 to S112 to the processing when the major failure has occurred in the first embodiment (FIG. 4). Since steps S101 to S107 are the same as those in the first embodiment, here, only the added steps S110 to S112 will be described.

First, when the determination unit 401 determines that the major failure has occurred (step S103; YES), the resynchronization processing unit 404 determines whether the magnetic geared motor 12 can be controlled (step S110). When the major failure other than the step-out ((A1) to (A6) of FIG. 3) has occurred, the resynchronization processing unit 404 determines that it is difficult to control the magnetic geared motor 12 (step S110; NO). In this case, the protection device 4 proceeds to step S104 and performs processing (steps S104 to S107) of stopping the magnetic geared motor 12 and the load machine LD, as in the first embodiment.

On the other hand, when only the step-out has occurred, the resynchronization processing unit 404 determines that the magnetic geared motor 12 can be controlled (step S110; YES). In this case, the resynchronization processing unit 404 executes resynchronization processing of resynchronizing the rotation of the high-speed rotor HSR and the rotation of the low-speed rotor PPR (step S111).

Specifically, the resynchronization processing unit 404 sets a value obtained by correcting the rotation speed of the low-speed rotor PPR by the reduction ratio as a rotation speed target value of the high-speed rotor HSR. In addition, the resynchronization processing unit 404 generates the torque command corresponding to the rotation speed target value and outputs the torque command to the inverter control device 3. The inverter control device 3 controls the inverter 10 based on the torque command instructed by the resynchronization processing unit 404. That is, the resynchronization processing unit 404 adjusts the rotation speed of the high-speed rotor HSR to match the rotation speed of the low-speed rotor PPR such that the rotation of the high-speed rotor HSR and the rotation of the low-speed rotor PPR are resynchronized.

Next, the resynchronization processing unit 404 determines whether or not the resynchronization is successful (step S112). For example, when the rotation speed deviation between the high-speed rotor HSR and the low-speed rotor PPR is equal to or less than the rotation speed threshold value and the twist angle is equal to or less than the twist angle threshold value, the resynchronization processing unit 404 determines that the resynchronization is successful (step S112; YES). In this case, since the major failure (step-out) is eliminated, the state becomes the normal operation state, and the processing returns to step S101.

On the other hand, when a state continues in which the rotation speed deviation between the high-speed rotor HSR and the low-speed rotor PPR exceeds the rotation speed threshold value or the twist angle exceeds the twist angle threshold value, the resynchronization processing unit 404 determines that the resynchronization has failed (step S112; NO). In this case, since the major failure (step-out) is not eliminated, the processing proceeds to step S104, and the processing (steps S104 to S107) of stopping the magnetic geared motor 12 and the load machine LD is performed as in the first embodiment.

As described above, the protection device 4 according to the present embodiment further includes the resynchronization processing unit 404 that resynchronizes the rotation of the high-speed rotor HSR and the rotation of the low-speed rotor PPR when it is determined that the failure mode is the major failure and only the step-out has occurred.

In this way, the protection device 4 can resynchronize the high-speed rotor HSR and the low-speed rotor PPR when only the step-out has occurred, thereby allowing the drive system 1 to return to the normal operation state. As a result, it is possible to suppress the damage to the drive system 1 due to the step-out and to improve the operating rate of the drive system 1.

### <Other Embodiments>

Although the embodiments have been described in detail with reference to the accompanying drawings, the specific configuration is not limited to the above, and various design changes can be made. That is, in another embodiment, the order of the above processing may be changed as appropriate. Further, some of the processing may be executed in parallel.

In each of the above embodiments, an example in which the protection device 4 performs the interlock control has been described, but the present disclosure is not limited to this. In another embodiment, the main control device 2 may perform the same interlock control as the protection device 4. For example, the main control device 2 includes all of the determination unit 401, the stop processing unit 402, the brake processing unit 403, and the resynchronization processing unit 404 of the protection device 4. When the main control device 2 is operating normally, that is, when the minor failure has occurred or when the major failure other than (A1) in FIG. 3 has occurred, the main control device 2 performs the interlock control shown in FIG. 4 or FIG. 11. In addition, in this case, the protection device 4 performs the interlock control on behalf of the main control device 2 only when the main control device 2 fails.

In addition, in still another embodiment, the inverter control device 3 may include the determination unit 401, the stop processing unit 402, the brake processing unit 403, and the resynchronization processing unit 404 of the protection device 4. When the inverter control device 3 is operating normally and the failure that can be detected by the inverter control device 3 has occurred, that is, when the minor failure has occurred or when the major failure other than (A1) and (A2) in FIG. 3 has occurred, the inverter control device 3 performs the interlock control shown in FIG. 4 or FIG. 11 in cooperation with the main control device 2 or the protection device 4. For example, in the configuration example shown in FIG. 1, the inverter control device 3 cannot directly control the brake device 13. Accordingly, the brake processing unit 403 of the inverter control device 3 requests the main control device 2 or the protection device 4 to output the brake command in step S107 of FIG. 4. In addition, when the inverter control device 3 has failed or when the major failure that cannot be detected by the inverter control device 3 has occurred, the main control device 2 or the protection device 4 performs the interlock control on behalf of the inverter control device 3. Depending on the state of the major failure, which of the main control device 2, the inverter control device 3, and the protection device 4 executes the interlock control may be set in advance.

In this way, by allowing a control device other than the protection device 4 to perform the same interlock control, even when the protection device 4 has failed, it is possible to safely stop the magnetic geared motor 12 and the load machine LD.

### <Supplementary Note>

The protection device, the drive system, the protection method, and the program described in the above embodiments are understood as follows, for example.
(1) A first aspect relates to a protection device 4 for a drive system 1 including a magnetic geared motor 12 including a high-speed rotor HSR and a low-speed rotor PPR configured to rotationally drive a load machine LD by rotating in synchronization with the high-speed rotor HSR, an inverter 10 configured to generate a voltage for driving the magnetic geared motor 12, a rotation angle sensor 17 configured to measure the rotation angle and the rotation speed of each of the high-speed rotor HSR and the low-speed rotor PPR, a current sensor 15 configured to measure a motor current flowing from the inverter 10 to the magnetic geared motor 12, a main control device 2 configured to output a torque command for controlling torque of the magnetic geared motor 12, and an inverter control device 3 configured to output a current command for adjusting the motor current to the inverter 10, based on the torque command, the measurement value of the rotation angle, and the measurement value of the motor current, the protection device 4 including: a determination unit 401 configured to determine, based on input signals input from the magnetic geared motor 12, the inverter 10, the rotation angle sensor 17, the current sensor 15, the main control device 2, and the inverter control device 3, whether a failure mode of the drive system 1 is a major failure indicating a failure that disables control of the magnetic geared motor 12 of the magnetic geared motor 12, or a minor failure indicating a failure that enables control of the magnetic geared motor 12; and a resynchronization processing unit 404 configured to resynchronize rotation of the high-speed rotor HSR and rotation of the low-speed rotor PPR when the failure mode is determined to be the major failure and only step-out has occurred.
   In this way, the protection device 4 can resynchronize the high-speed rotor HSR and the low-speed rotor PPR when only the step-out has occurred, thereby allowing the drive system 1 to return to the normal operation state. As a result, it is possible to suppress the damage to the drive system 1 due to the step-out and to improve the operating rate of the drive system 1.
(2) A second aspect relates to the protection device 4 according to the first aspect, further including: a stop processing unit 402 configured to stop the current when the failure mode is determined to be the major failure.
   In this way, the protection device 4 can safely stop the magnetic geared motor 12 and the load machine LD in conjunction with each other when the major failure has occurred.
(3) A third aspect relates to the protection device 4 according to the second aspect, further including: a brake processing unit 403 configured to output a brake command to a brake device 13 included in the drive system 1 when, after performing processing for stopping the current, the current is equal to or less than a specified current value that is specified in advance or the torque of the magnetic geared motor 12 is equal to or less than a specified torque value that is specified in advance.
   In this way, the protection device 4 can safely stop the magnetic geared motor 12 and the load machine LD while suppressing the actual step-out of the magnetic geared motor 12 when the pre-step-out state is detected as the major failure.
(4) A fourth aspect relates to the protection device 4 according to the second or third aspect, in which the stop processing unit 402 is configured to, when the failure mode is determined to be the minor failure, until the torque of the magnetic geared motor 12 is equal to or less than a specified torque value that is specified in advance, calculate a negative torque limit value based on step-out limit information indicating a relationship between an initial torque that is a previous torque command and a negative torque serving as step-out limit, and adjust the torque command such that the amount of regenerative braking does not exceed the negative torque limit value.
   In this manner, the protection device 4 can achieve both the suppression of the step-out and the sudden braking when the minor failure occurs. As a result, the rotation speed of the high-speed rotor HSR and the rotation speed of the low-speed rotor PPR can be reduced in conjunction with each other, and the load machine LD can be safely stopped together with the magnetic geared motor 12.
(5) A fifth aspect relates to a drive system 1 including: a magnetic geared motor 12 including a high-speed rotor HSR and a low-speed rotor PPR configured to rotationally drive a load machine LD by rotating in synchronization with the high-speed rotor HSR; an inverter 10 configured to generate a voltage for driving the magnetic geared motor 12; a rotation angle sensor 17 configured to measure the rotation angle and the rotation speed of each of the high-speed rotor HSR and the low-speed rotor PPR; a current sensor 15 configured to measure a motor current flowing from the inverter 10 to the magnetic geared motor 12; a main control device 2 configured to output a torque command for controlling torque of the magnetic geared motor 12; an inverter control device 3 configured to output a current command for adjusting the motor current to the inverter 10, based on the torque command, the measurement value of the rotation angle, and the measurement value of the motor current; a determination unit 401 configured to determine, based on input signals input from the magnetic geared motor 12, the inverter 10, the rotation angle sensor 17, the current sensor 15, the main control device 2, and the inverter control device 3, whether a failure mode of the drive system 1 is a major failure indicating a failure that disables control of the magnetic geared motor 12 of the magnetic geared motor 12, or a minor failure indicating a failure that enables control of the magnetic geared motor 12; and a resynchronization processing unit 404 configured to resynchronize rotation of the high-speed rotor HSR and rotation of the low-speed rotor PPR when the failure mode is determined to be the major failure and only step-out has occurred.
(6) A sixth aspect relates to a protection method for a drive system 1 including a magnetic geared motor 12 including a high-speed rotor HSR and a low-speed rotor PPR configured to rotationally drive a load machine LD by rotating in synchronization with the high-speed rotor HSR, an inverter 10 configured to generate a voltage for driving the magnetic geared motor 12, a rotation angle sensor 17 configured to measure the rotation angle and the rotation speed of each of the high-speed rotor HSR and the low-speed rotor PPR, a current sensor 15 configured to measure a motor current flowing from the inverter 10 to the magnetic geared motor 12, a main control device 2 configured to output a torque command for controlling torque of the magnetic geared motor 12, and an inverter control device 3 configured to output a current command for adjusting the motor current to the inverter 10, based on the torque command, the measurement value of the rotation angle, and the measurement value of the motor current, the protection method including: a step of determining, based on input signals input from the magnetic geared motor 12, the inverter 10, the rotation angle sensor 17, the current sensor 15, the main control device 2, and the inverter control device 3, whether a failure mode of the drive system 1 is a major failure indicating a failure that disables control of the magnetic geared motor 12 of the magnetic geared motor 12, or a minor failure indicating a failure that enables control of the magnetic geared motor 12; and a step of resynchronizing rotation of the high-speed rotor HSR and rotation of the low-speed rotor PPR when the failure mode is determined to be the major failure and only step-out has occurred.
(7) A seventh aspect relates to a program causing a protection device 4 for a drive system 1 including a magnetic geared motor 12 including a high-speed rotor HSR and a low-speed rotor PPR configured to rotationally drive a load machine LD by rotating in synchronization with the high-speed rotor HSR, an inverter 10 configured to generate a voltage for driving the magnetic geared motor 12, a rotation angle sensor 17 configured to measure the rotation angle and the rotation speed of each of the high-speed rotor HSR and the low-speed rotor PPR, a current sensor 15 configured to measure a motor current flowing from the inverter 10 to the magnetic geared motor 12, a main control device 2 configured to output a torque command for controlling torque of the magnetic geared motor 12, and an inverter control device 3 configured to output a current command for adjusting the motor current to the inverter 10, based on the torque command, the measurement value of the rotation angle, and the measurement value of the motor current, to execute: a step of determining, based on input signals input from the magnetic geared motor 12, the inverter 10, the rotation angle sensor 17, the current sensor 15, the main control device 2, and the inverter control device 3, whether a failure mode of the drive system 1 is a major failure indicating a failure that disables control of the magnetic geared motor 12 of the magnetic geared motor 12, or a minor failure indicating a failure that enables control of the magnetic geared motor 12; and a step of resynchronizing rotation of the high-speed rotor HSR and rotation of the low-speed rotor PPR when the failure mode is determined to be the major failure and only step-out has occurred.

### INDUSTRIAL APPLICABILITY

According to the above aspects, the magnetic geared motor is resynchronized, and the reduction in the operating rate of the drive system is suppressed.

### REFERENCE SIGNS LIST

1 Drive system
10 Inverter
101 Semiconductor switch
102 Power line
11 Contactor
12 Magnetic geared motor
HSR High-speed rotor
PPR Low-speed rotor
121 Rotary shaft
JT Joint
13 Brake device
15 Current sensor
16 Temperature sensor
17 Rotation angle sensor
17A High-speed side rotation angle sensor
17B Low-speed side rotation angle sensor
18 Sensor
2 Main control device
3 Inverter control device
4 Protection device
40 Processor
401 Determination unit
402 Stop processing unit
403 Brake processing unit
404 Resynchronization processing unit
41 Memory
42 Storage
43 Communication interface
D1 Step-out limit information
D2 Inertia ratio information

## Claims

1. A protection device for a drive system including
a magnetic geared motor including a high-speed rotor and a low-speed rotor configured to rotationally drive a load machine by rotating in synchronization with the high-speed rotor,
an inverter configured to supply a current to the magnetic geared motor,
a rotation angle sensor configured to measure a rotation angle and a rotation speed of each of the high-speed rotor and the low-speed rotor,
a current sensor configured to measure the current flowing from the inverter to the magnetic geared motor,
a main control device configured to output a torque command for controlling torque of the magnetic geared motor, and
an inverter control device configured to output a current command for adjusting the current supplied by the inverter, based on the torque command, a measurement value of the rotation angle, and a measurement value of the current,
the protection device comprising:
a determination unit configured to determine, based on input signals input from the magnetic geared motor, the inverter, the rotation angle sensor, the current sensor, the main control device, and the inverter control device, whether a failure mode of the drive system is a major failure indicating a failure that disables control of the magnetic geared motor, or a minor failure indicating a failure that enables control of the magnetic geared motor; and
a resynchronization processing unit configured to resynchronize rotation of the high-speed rotor and rotation of the low-speed rotor when the failure mode is determined to be the major failure and only step-out has occurred.

2. The protection device according to Claim 1, further comprising:
a stop processing unit configured to stop the current when the failure mode is determined to be the major failure.

3. The protection device according to Claim 2, further comprising:
a brake processing unit configured to output a brake command to a brake device included in the drive system when, after performing processing for stopping the current, the current is equal to or less than a specified current value that is specified in advance or the torque of the magnetic geared motor is equal to or less than a specified torque value that is specified in advance.

4. The protection device according to Claim 2 or 3,
wherein the stop processing unit is configured to, when the failure mode is determined to be the minor failure, until the torque of the magnetic geared motor is equal to or less than a specified torque value that is specified in advance,
calculate a negative torque limit value based on step-out limit information indicating a relationship between an initial torque that is a previous torque command and a negative torque serving as step-out limit, and
adjust the torque command such that an amount of regenerative braking does not exceed the negative torque limit value.

5. A drive system comprising:
a magnetic geared motor including a high-speed rotor and a low-speed rotor configured to rotationally drive a load machine by rotating in synchronization with the high-speed rotor;
an inverter configured to supply a current to the magnetic geared motor;
a rotation angle sensor configured to measure a rotation angle and a rotation speed of each of the high-speed rotor and the low-speed rotor;
a current sensor configured to measure the current flowing from the inverter to the magnetic geared motor;
a main control device configured to output a torque command for controlling torque of the magnetic geared motor; and
an inverter control device configured to output a current command for adjusting the current supplied by the inverter, based on the torque command, a measurement value of the rotation angle, and a measurement value of the current;
a determination unit configured to determine, based on input signals input from the magnetic geared motor, the inverter, the rotation angle sensor, the current sensor, the main control device, and the inverter control device, whether a failure mode is a major failure indicating a failure that disables control of the magnetic geared motor, or a minor failure indicating a failure that enables control of the magnetic geared motor; and
a resynchronization processing unit configured to resynchronize rotation of the high-speed rotor and rotation of the low-speed rotor when the failure mode is determined to be the major failure and only step-out has occurred.

6. A protection method for a drive system including
a magnetic geared motor including a high-speed rotor and a low-speed rotor configured to rotationally drive a load machine by rotating in synchronization with the high-speed rotor,
an inverter configured to supply a current to the magnetic geared motor,
a rotation angle sensor configured to measure a rotation angle and a rotation speed of each of the high-speed rotor and the low-speed rotor,
a current sensor configured to measure the current flowing from the inverter to the magnetic geared motor,
a main control device configured to output a torque command for controlling torque of the magnetic geared motor, and
an inverter control device configured to output a current command for adjusting the current supplied by the inverter, based on the torque command, a measurement value of the rotation angle, and a measurement value of the current,
the protection method comprising:
a step of determining, based on input signals input from the magnetic geared motor, the inverter, the rotation angle sensor, the current sensor, the main control device, and the inverter control device, whether a failure mode of the drive system is a major failure indicating a failure that disables control of the magnetic geared motor, or a minor failure indicating a failure that enables control of the magnetic geared motor; and
a step of resynchronizing rotation of the high-speed rotor and rotation of the low-speed rotor when the failure mode is determined to be the major failure and only step-out has occurred.

7. A program causing a protection device for a drive system including
a magnetic geared motor including a high-speed rotor and a low-speed rotor configured to rotationally drive a load machine by rotating in synchronization with the high-speed rotor,
an inverter configured to supply a current to the magnetic geared motor,
a rotation angle sensor configured to measure a rotation angle and a rotation speed of each of the high-speed rotor and the low-speed rotor,
a current sensor configured to measure the current flowing from the inverter to the magnetic geared motor,
a main control device configured to output a torque command for controlling torque of the magnetic geared motor, and
an inverter control device configured to output a current command for adjusting the current supplied by the inverter, based on the torque command, a measurement value of the rotation angle, and a measurement value of the current,
to execute:
a step of determining, based on input signals input from the magnetic geared motor, the inverter, the rotation angle sensor, the current sensor, the main control device, and the inverter control device, whether a failure mode of the drive system is a major failure indicating a failure that disables control of the magnetic geared motor, or a minor failure indicating a failure that enables control of the magnetic geared motor; and
a step of resynchronizing rotation of the high-speed rotor and rotation of the low-speed rotor when the failure mode is determined to be the major failure and only step-out has occurred.
